# EUROPÄISCHE PATENTSCHRIFT

(11) **EP 1 380 332 B1**
(45) Veröffentlichungstag und Bekanntmachung des Hinweises auf die Patenterteilung: **18.04.2007**
(21) Anmeldenummer: 02015171.8
(22) Anmeldetag: 08.07.2002
(51) Int. Cl.: B01D 29/48

(54) **Anschwemmfilterkerze, Anschwemmfilter und Verwendung einer Filterkerze**
Filtering candle for a pre-coat filter, pre-coat filter and use of a filtering candle
Bougie de filtration pour filtre à pré-couche, Filtre à pré-couche et utilisation d' une bougie de filtration

(43) Veröffentlichungstag der Anmeldung: 14.01.2004
(73) Patentinhaber: Filtrox AG, 9000 St. Gallen (CH)
(72) Erfinder: Loser, Werner, 9242 Oberuzwil (CH)
(74) Vertreter: Müller, Christoph Emanuel

(56) Entgegenhaltungen:
- EP-A- 0 203 206
- DE-A- 2 512 781
- DE-A- 19 518 575
- US-A- 3 253 714
- US-A- 3 503 516
- US-A- 4 267 039
- US-A- 4 849 103

## Beschreibung

Die Erfindung betrifft eine Anschwemmfilterkerze, einen Anschwemmkerzenfilter sowie die Verwendung einer Filterkerze gemäss den Merkmalen des Oberbegriffs der unabhängigen Patentansprüche.

Es ist bekannt, zur Filtration von Flüssigkeiten, insbesondere von Bier oder Wein, sogenannte Anschwemmfilter zu verwenden. Dabei wird ein der zu filtrierenden Flüssigkeit zugesetztes oder vorher angeschwemmtes Filterhilfsmittel verwendet, welches gegen eine Filterfläche angeschwemmt wird. Bei Durchtritt der zu filtrierenden Flüssigkeit durch die angeschwemmte Schicht von Filterhilfsmitteln wird die Flüssigkeit filtriert.

Zur Anschwemmfiltration sind sogenannte Horizontalfilter und sogenannte Kerzenfilter bekannt. Bei Horizontalfiltern werden in einem Filterkessel auf einer Welle übereinander eine Mehrzahl von Filterscheiben angeordnet. Die Schicht aus Filterhilfsmittel wird auf der Oberseite dieser Scheiben abgelagert. Bei Durchtritt der Flüssigkeit durch die Filterschicht, typischerweise eine Schicht aus Kieselgur erfolgt die Filtration. Die dadurch filtrierte Flüssigkeit gelangt in das Innere der Scheiben und wird vom Inneren der Scheiben durch eine zentrale Leitung abgeführt.

Bei sogenannten Kerzenfiltern ist in einem Filterkessel eine Trennwand vorgesehen, welche den Filterkessel in einen Unfiltrat- und in einen Filtratraum trennt. An der Trennwand sind Filterkerzen befestigt, welche sich in den Unfiltratraum erstrecken. Die Filterkerzen weisen eine mit Öffnungen versehene Oberfläche auf. Beispielsweise ist es aus EP 203 206 bekannt, Filterkerzen mit einem Draht zu verwenden, der schraubenlinienförmig auf Drahtstäben aufgewickelt ist. Ein zwischen den Drahtwindungen gebildeter dünner Spalt erlaubt den Durchtritt von Flüssigkeit von der Aussenseite der Filterkerze, auf welcher die Anschwemmschicht angelagert wird in das Innere der Kerze. Die Flüssigkeit wird, aus dem Inneren der Filterkerze durch eine Öffnung in der Trennplatte in den Filtratraum geleitet und kann von dort aus als Filtrat abgeführt werden.

Ein weiteres Beispiel für Kerzenfilter ist aus US 3,253,741 bekannt. In diesem Beispiel liegt das Verhältnis der totalen Durchtrittsfläche der Öffnungen auf den Kerzen zur Längs-Querschnittsfläche der Kerze zwischen 1/3 und 4/5. Dadurch werden Verbesserungen beim Rückspülverhalten und beim Anschwemm der Filterkerzen erreicht.

Solche Anschwemmkerzenfilter haben sich bewährt und weit durchgesetzt. Es besteht ein Bedürfnis, auch bestehende Horizontalfilter zu Kerzenfiltern umzurüsten. Dabei könnte auf bestehende Filterkessel zugegriffen werden. Es bräuchten lediglich die Filterscheiben aus dem Kessel entnommen, eine horizontale Trennplatte eingesetzt und eine entsprechende Anzahl von Filterkerzen daran befestigt werden. Ein Problem bei solchen bekannten Filterkerzen besteht aber darin, dass die mit diesen Kerzen bei gleichem Kesselvolumen erzielbare Filterleistung geringer ist als die mit den Horizontalfiltern erzielte Leistung.

Auch bei Kerzenfiltern besteht das Bedürfnis, bei möglichst geringem Inhalt des Filterkessels möglichst hohe Filtrationsleistungen zu erzielen.

Es ist daher die Aufgabe der vorliegenden Erfindung, die Nachteile des Bekannten zu vermeiden, insbesondere also eine Filterkerze zu schaffen, welche sich auch zum Umrüsten von Horizontalfilteranlagen in Kerzenfilter eignet. Bei einer solchen Umrüstung soll die Filterleistung des Kerzenfilters in etwa vergleichbar sein wie die Filterleistung des Horizontalfilters. Eine weitere Aufgabe der Erfindung besteht darin, eine Filterkerze zu schaffen, mit welcher sich die Leistung eines Anschwemmkerzenfilters bezogen auf das Volumen des Filterkessels erhöhen lässt.

Bei der Anschwemmfiltration ist es erforderlich, von Zeit zu Zeit die Filteranordnung zurückzuspülen, um die mit Trubstoffen beladene Schicht aus Filterhilfsmitteln von der Oberfläche der Filterkerzen zu entfernen. Dabei sollte sichergestellt werden, dass die Anschwemmschicht möglichst vollständig entfernt wird und dass das zur Rückspülung eingesetzte Wasser möglichst rasch und vollständig wieder von der Kerzenoberfläche entfernt wird. Eine weitere Aufgabe der vorliegenden Erfindung besteht daher darin, eine Filterkerze so weiterzuentwickeln, dass bei Rückspülung die Rückspülflüssigkeit möglichst rasch und vollständig von der Oberfläche der Filterkerze, insbesondere von deren unterem Abschlussstück entfernt werden kann.

Erfindungsgemäss werden diese Aufgaben mit einer Anschwemmfilterkerze, einem Anschwemmkerzenfilter und der Verwendung einer Anschwemmfilterkerze mit den Merkmalen des kennzeichnenden Teils der unabhängigen Patentansprüche gelöst.

Die erfindungsgemässe Anschwemmfilterkerze ist in an sich bekannter Weise mit einer Mehrzahl von Tragstäben versehen. Ein Kopfstück zur Befestigung der Kerze an einer Trennwand oder Lochplatte eines Kerzenfilters ist mit einem Ende der Tragstäbe verbunden. Ein Abschlussstück zur Abtrennung des Kerzeninnenraums der Filterkerze gegen den Unfiltratraum ist mit dem anderen Ende der Tragstäbe verbunden. Ein Draht ist schraubenlinienförmig auf die Tragstäbe aufgewickelt. Zwischen benachbarten Drahtwicklungen wird ein Spalt für den Durchtritt von Flüssigkeiten gebildet. Der Draht bildet eine Kerzenwand, welche eine Unterlage für eine Anschwemmfilterschicht bildet.

Erfindungsgemäss weist die Filterkerze einen Aussendurchmesser auf, der kleiner als 30 cm ist. Gemäss einer bevorzugten Ausführungsform beträgt der Aussendurchmesser der Anschwemmfilterkerze zwischen 20 und 28 cm. Besonders bevorzugt ist ein Aussendurchmesser von etwa 25 cm.

Herkömmlich eingesetzte Filterkerzen weisen verhältnismässig grosse Durchmesser auf. Typischerweise wurden bislang Kerzen mit Durchmessen von 32,5 cm oder auch viel grössere Kerzen eingesetzt. Durch die gezielte Reduktion des Durchmessers der Filterkerze können verschiedene Vorteile erzielt werden.

Die zur Verfügung stehende Filteroberfläche und dadurch die Filterleistung in einem Kessel mit vorgegebenem Inhalt kann deutlich vergrössert werden. Da die Filterkerzen kleiner sind, kann eine grössere Anzahl von Kerzen in den Unfiltratraum eines Filterkessels eingesetzt werden. Dank der Reduktion des Aussendurchmessers wird daher auch ein Umrüsten von Horizontalfilteranlagen zu Anschwemmkerzenfiltern möglich, so dass die Leistung des umgerüsteten Filters annähernd identisch mit der Leistung des Horizontalfilters ist.

Ein weiterer Vorteil der Erfindung besteht darin, dass das Volumen des Filtrats im Innern der Filterkerzen reduziert wird. Auf Grund der Reduktion des Filtratvolumens kann die Menge von durchmischtem Filtrat bei sogenannten Phasenwechseln verringert werden. Wenn in einer Filteranlage verschiedene Flüssigkeiten filtriert werden sollen, ergibt sich im Zeitpunkt des Wechsels der zu filtrierenden Flüssigkeit, das heisst beim sogenannten Phasenwechsel immer eine gewisse Durchmischung der ersten mit der zweiten Flüssigkeit. Diese durchmischte Flüssigkeit geht dabei verloren. Durch die Reduktion des Kerzendurchmessers kann der Filtratraum im Innern der Kerzen reduziert werden, so dass sich auch das Volumen der durchmischten Flüssigkeit bei Phasenwechsel reduziert.

Ein weiterer Vorteil der Erfindung besteht darin, dass die Dicke der Anschwemmfilterschicht bei gleichem Trubvolumen geringer wird. Dadurch lässt sich die Filtrationsleistung erhöhen. Bei vorgegebenem Trubvolumen steht bei mit erfindungsgesmässen Kerzen ausgerüsteten Filteranlagen mehr Filterfläche zur Verfügung. Dadurch reduziert sich automatisch die Dicke der Anschwemmschicht.

Ein weiterer Vorteil der Erfindung besteht darin, dass die Randzonen von erfindungsgemäss ausgestatteten Filteranlagen besser ausgenutzt werden können. Filterkessel sind im Allgemeinen zylindrisch aufgebaut. Dank der Wahl von kleineren Filterkerzen kann der Innenraum des Filterkessels kompakter bepackt, insbesondere auch im Randbereich ausgefüllt werden.

Gemäss einer bevorzugten Ausführungsform der Erfindung wird im Vergleich zu herkömmlichen Filterkerzen auch die Anzahl der Tragstäbe reduziert. Typischerweise haben herkömmliche Filterkerzen acht oder mehr Tragstäbe. Die erfindungsgemässe Filterkerze setzt beispielsweise sechs Tragstäbe ein. Durch die kleinere Anzahl der Tragstäbe reduziert sich die Anzahl der Schweissverbindungen zwischen den Tragstäben und dem aufgewickeltem Draht, was zu einer Reduktion der Herstellkosten führt. Auch aus hygienischer Sicht ist eine Reduktion der Tragstäbe von Vorteil, da die schwer zu reinigenden Anschlussstellen zwischen den Tragstäben und dem aufgewickeltem Draht auf ein Minimum reduziert werden.

Gemäss einer weiteren bevorzugten Ausführungsform weisen die Tragstäbe auf ihrer radial nach innen gerichteten Seite eine Querschnittsverjüngung, beispielsweise eine Abrundung auf. Solche Filterkerzen mit einem aufgewickelten Draht werden automatisch hergestellt. Dazu werden die Tragstäbe auf einem drehbaren Dorn gehalten. Der Draht wird spiralförmig aufgewickelt und jeweils mit den Tragstäben im Kreuzungspunkt verschweisst. Auf Grund der Anordnung des Dorns und der Dimension der Tragstäbe kann die Filterkerze nicht beliebig klein gemacht werden. Ansonsten würde die Gefahr bestehen, dass sich die Tragstäbe im Zentrum des Dorns berühren oder die Vertiefungen zur Aufnahme der Tragstäbe den Dorn zu sehr schwächen. Dank der Verjüngung am radial gegen Innen gerichteten Ende ist es möglich, den Radius der Filterkerze weiter zu verringern, ohne dass die Gefahr besteht, dass die Tragstäbe sich im Dorn berühren bzw. ohne dass der Dorn auf Grund der Grösse der Aussparungen für die Tragstäbe zu stark geschwächt würde.

Gemäss einer weiteren bevorzugten Ausführungsform ist das Abschlussstück der Anschwemmfilterkerze, welches den Innenraum der Kerze vom Unfiltratraum trennt, gegen sein Ende hin verjüngt. Typischerweise ist eine kugelförmige aber auch eine konische Verjüngung denkbar. Mit dieser Anordnung wird das Rückspülverhalten der Anschwemmfilterkerze verbessert. Insbesondere läuft die Rückspülflüssigkeit auf Grund der Verjüngung am untersten Punkt des Abschlussstückes zusammen und sammelt sich dort. Es wird verhindert, dass einzelne Tropfen an der Oberfläche des Anschlussstückes zurückbleiben.

Zudem erlaubt die beschriebene Form ein einwandfreies Entlüften des Filters und verhindert, dass an der nach unten gerichteten Fläche des Abschlussstücks Gasblasen zurückbleiben, die während der Filtration den Filtrationsvorgang negativ beeinflussen könnten. Ein weiterer Vorteil der verjüngten Ausführung ist die Reduktion des Strömungswiderstandes. Dadurch entstehen auch weniger Wirbel, die zu einer Abschwemmung des Filterhilfsmittel im unteren Teil der Kerzen führen können.

Diese Ausführungsform ist auch im Zusammenhang mit herkömmlichen Anschwemmfilterkerzen mit nicht reduzierten Aussendurchmessern einsetzbar.

Das Filtrat wird aus dem Innenraum der Filterkerze durch eine Durchlassöffnung im Kopfstück in die Öffnungen der Lochplatte geleitet. Es ist vorteilhaft, wenn die erfindungsgemässe Anschwemmfilterkerze in Kombination mit Lochplatten eingesetzt werden könnte, welche gleiche Lochdurchmesser aufweisen wie Lochplatten von herkömmlichen Filteranlagen. Daher sollte die Durchflussöffnung im Kopfstück der erfindungsgemässen Kerze einen gleichen Durchmesser aufweisen wie die Durchflussöffnung bei herkömmlichen Kerzen. Weil aber der Aussendurchmesser der erfindungsgemässen Kerze geringer ist als bei herkömmlichen Kerzen reduziert sich die Dichtfläche, mit welcher das Kopfstück an der Lochplatte anliegt. Gemäss einer weiteren bevorzugten-Ausführungsform ist daher vorgesehen, das Ende des Kopfstückes mit einer konischen Verjüngung zu versehen. Mit einer sich unter einem Winkel von 45 Grad erstreckenden konischen Dichtfläche kann beispielsweise die Dichtfläche im Vergleich zu einer horizontalen Dichtfläche um den Faktor Wurzel zwei vergrössert werden.

Der erfindungsgemässe Anschwemmkerzenfilter besteht in an sich bekannter Weise aus einem Filterkessel mit einer Trennwand. Die Trennwand trennt den Filterkessel in einen Unfiltratraum und in einen Filtratraum. Eine Vielzahl von Anschwemmfilterkerzen sind an der Trennwand befestigt und erstrecken sich in den Unfiltratraum.

Erfindungsgemäss werden die eingesetzten Anschwemmfilterkerzen so dimensioniert und regelmässig angeordnet, dass das Produkt aus Kerzendurchmesser in mm und Kerzenabstand zwischen den Achsen benachbarter Kerzen in mm kleiner oder gleich 2300mm2 ist. Das Produkt bildet das Optimum aus Filterfläche und Trubvolumen, wobei der Kerzendurchmesser die Filterfläche und der Kerzenabstand das Trubvolumen bestimmen. Dadurch wird die Filterfläche in Bezug auf das Trubvolumen maximiert und der Filter optimiert. Mit der vorliegenden Erfindung wurde unerwarteter Weise gefunden, dass sich die Filterleistung durch einfache Massnahmen bei vorgegebener Randbedingungen, insbesondere Dimension des Filterkessels und Trubvolumen, deutlich vergrössern lässt. Auf Grund der Reduktion des Kerzendurchmessers und somit des Querschnitts des Kerzeninnenraums wird der in den Anschwemmfilterkerzen für das Filtrat gebildete Raum reduziert. Ausserdem wird im Filterkessel Platz für eine grössere Anzahl von Filterkerzen geschaffen. Es ist daher möglich, bei konstant gehaltenem Trubvolumen die Filterfläche, das heisst die Gesamtfläche der Oberflächen der einzelnen Kerzen zu vergrössern. Dadurch wird die Filterleistung vergrössert. Gleichzeitig wird die Schichtdicke der Anschwemmschicht verringert. Ausserdem führt die Reduktion des Volumens des Filtratraums im Kerzeninnenraum dazu, dass das Volumen der gemischten Phase bei Phasenwechseln von Flüssigkeiten reduziert wird.

Das Produkt aus Kerzendurchmesser und Kerzenabstand sollte gleichzeitig grösser als 1000mm² sein. Eine beliebige Reduktion ist aus praktischen Gründen kaum möglich, da bei zu kleinen oder zu nahe liegenden Filterkerzen kein akzeptables Anschwemmverhalten erzielt werden könnte.

Bevorzugt beträgt die Gesamtoberfläche der Filterkerzen mehr als 10m2 pro m Länge der Filterkerzen und pro m2 Querschnittfläche des Unfiltratraums. Vorzugsweise beträgt die Gesamtoberfläche der Filterkerzen mehr als 15 m2. Mit der erfindungsgemässen Anordnung ist es daher möglich, bei vergleichbaren Kesselvolumen um ca. 20% grössere Filterleistungen zu erzielen.

Die eingangs beschriebene Filterkerze lässt sich besonders vorteilhaft in einem solchen Anschwemmkerzenfilter einsetzen. Insbesondere lässt sich die eingangs beschriebene Filterkerze aber auch zum Umrüsten einer herkömmlichen Horizontalfilteranlage in eine Anschwemmkerzenfilter-Anlage einsetzen, ohne dass eine bedeutende Leistungseinbusse erfolgt.

Die Erfindung wird im Folgenden in Ausführungsbeispielen und an Hand der Zeichnungen näher erläutert. Es zeigen:
- Figur 1:: Eine schematische Darstellung eines erfindungsgemässen Anschwemmkerzenfilters,
- Figur 2:: eine Darstellung einer erfindungsgemässen Filterkerze in Seitenansicht, teilweise im Schnitt,
- Figur 3:: einen Querschnitt einer erfindungsgemässen Filterkerze mit einer vergrösserten Darstellung eines Tragstabs,
- Figur 4:: einen Querschnitt durch den Filterkessel eines erfindungsgemässen Anschwemmkerzenfilters,
- Figur 5a:: eine erste Ausführungsform einer bevorzugten Ausführung eines Abschlussstückes,
- Figur 5b:: eine zweite Ausführungsform einer bevorzugten Ausführung eines Abschlussstückes,
- Figur 6:: einen Querschnitt durch ein Kopfstück einer erfindungsgemässen Filterkerze,
- Figur 7:: einen vergrösserte Darstellung eines Ausschnitts aus Figur 4 und
- Figur 8:: einen Querschnitt durch einen Dorn zur Herstellung von erfindungsgemässen Filterkerzen

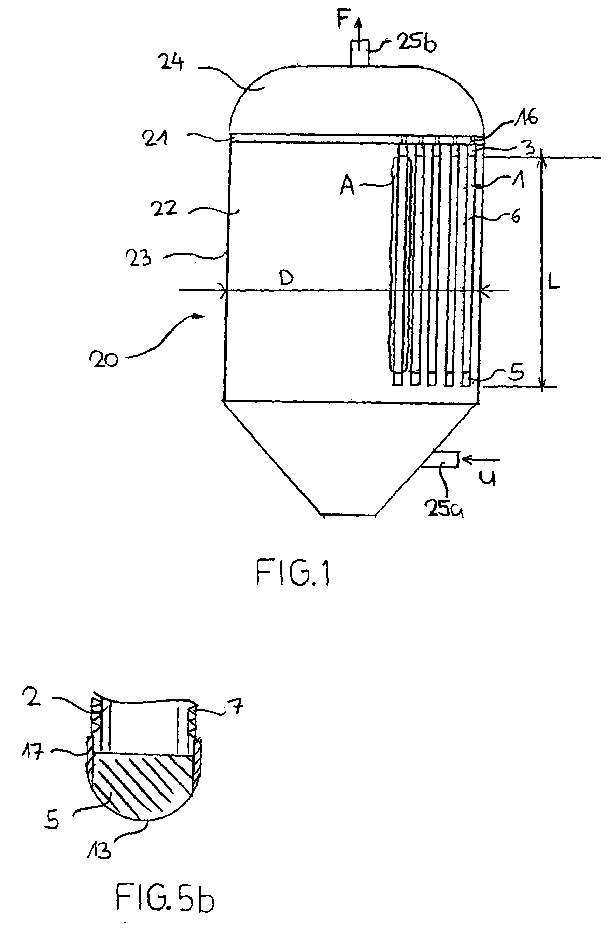

Figur 1 zeigt einen Anschwemmkerzenfilter 20. Der Anschwemmkerzenfilter 20 weist einen Kessel 23 auf. Eine Trennwand 21 trennt den Kessel 23 in einen Unfiltratraum 22 und in einen Filtratraum 24. Unfiltrierte Flüssigkeit U, das Unfiltrat, wird durch einen Anschluss 25a in den Unfiltratraum 22 geleitet.

Die als Lochplatte ausgebildete Trennwand 21 weist Öffnungen 16 zur Befestigung von Anschwemmfilterkerzen 1 auf. Die Anschwemmfilterkerzen 1 sind in an sich bekannter Weise mit einer aus einem Spaltrohr gebildeten Kerzenwand versehen.

Vor der Filtration wird in an sich bekannter Art und Weise ein Filterhilfsmittel an die Filterkerzen angeschwemmt. Dadurch bildet sich eine Filterhilfsmittelschicht A auf der Aussenseite der Kerzen 1. Zur Filtration tritt das Unfiltrat U durch die Anschwemmschicht A und gelangt dabei in das Innere 6 der Filterkerzen 1. Das Innere 6 der Filterkerzen 1 ist durch ein Abschlussstück 5 vom Unfiltratraum 22 getrennt. Die auf Grund des Durchtritts durch die Anschwemmschicht A filtrierte Flüssigkeit gelangt durch eine Durchlassöffnung in einem Kopfstück 3, mit welchem die Anschwemmfilterkerze 1 an der Trennwand 21 befestigt ist durch die Öffnungen 16 in der Trennwand 21 in den Filtratraum 24. Die filtrierte Flüssigkeit verlässt den Filtratraum 24 als Filtrat F durch einen zweiten Anschluss 25b.

Der Filterkessel 23 weist einen freien Innendurchmesser D auf. Der freie Innendurchmesser beträgt typischerweise einen halben bis zweieinhalb Meter, in einem konkreten Ausführungsbeispiel 1112mm. Die Filterkerzen 1 weisen eine aktive Länge L auf. Die Länge L bezeichnet denjenigen Teil der Filterkerze, in welchem die Kerzenwand durchlässig ist. Die Länge der Filterkerze kann typischerweise zwischen 50cm und 3m betragen. Im konkreten Ausführungsbeispiel beträgt die Länge L beispielsweise 892mm.

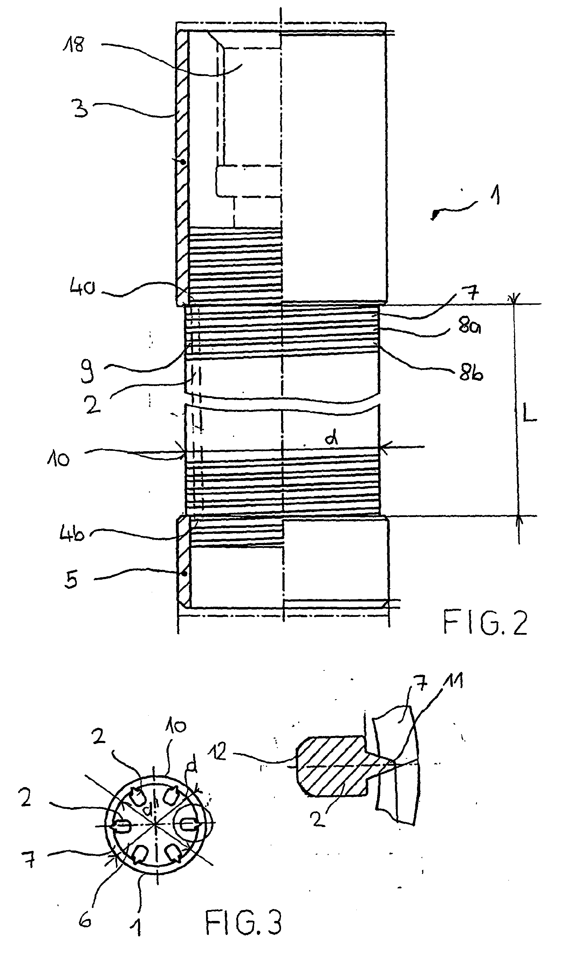

In Figur 2 ist eine vergrösserte Darstellung der erfindungsgemässen Filterkerze 1 gezeigt. Die Filterkerze 1 weist ein Kopfstück 3 auf. Das Kopfstück 3 ist mit einer Durchlassöffnung 18 versehen. Am Kopfstück 3 sind Tragstäbe 2 mit einem oberen Ende 4a befestigt. Die Befestigung erfolgt typischerweise durch Schweissen. Das andere Ende 4b der Tragstäbe 2 ist mit einem Abschlussstück 5 verbunden. In Figur 2 ist nur ein Tragstab 2 gezeigt. Typischerweise werden sechs Tragstäbe 2 in symmetrischer Anordnung eingesetzt (siehe Figur 3). Auf die Tragstäbe 2 ist ein Draht 7 schraubenlinienförmig aufgewickelt. Zwischen benachbarten Drahtwicklungen 8a, 8b wird ein Spalt 9 gebildet. Der Spalt 9 hat typischerweise eine Spaltbreite von 40 bis 100 µm. In jedem Kreuzungspunkt zwischen einem Tragstab 2 und dem Draht 7 ist der Draht 7 mit dem Tragstab 2 verschweisst.

Der aufgewickelte Draht 7 bildet eine Kerzenwand 10, die den Untergrund für die Anschwemmschicht A bildet. Die Filterkerze 1 weist einen Aussendurchmesser d auf. Erfindungsgemäss beträgt der Aussendurchmesser d weniger als 30cm. Im konkreten Ausführungsbeispiel beträgt der Aussendurchmesser d 25cm.

Figur 3 zeigt einen Querschnitt durch die Filterkerze 1 in einer Ebene senkrecht zur Kerzenachse. Der auf die Tragstäbe 2 aufgewickelte Draht 7 bildet eine Kerzenwand 10, welche einen Kerzeninnenraum 6 umschliesst. Der Kerzeninnenraum 6 definiert einen Filtratraum für die Flüssigkeit im Innern der Anschwemmfilterkerze 1. Die Tragstäbe 2 weisen auf einer Seite eine Spitze 11 auf. Die Spitze 11 dient zur Vereinfachung der Verschweissung der Tragstäbe 2 mit dem Draht 7. Auf der anderen Seite, das heisst auf der radial innenliegenden Seite der Tragstäbe 2 wiesen die Tragstäbe eine sich verjüngende Innenseite 12 auf. Die Innenseite 12 weist beispielsweise zwei Abrundungen auf.

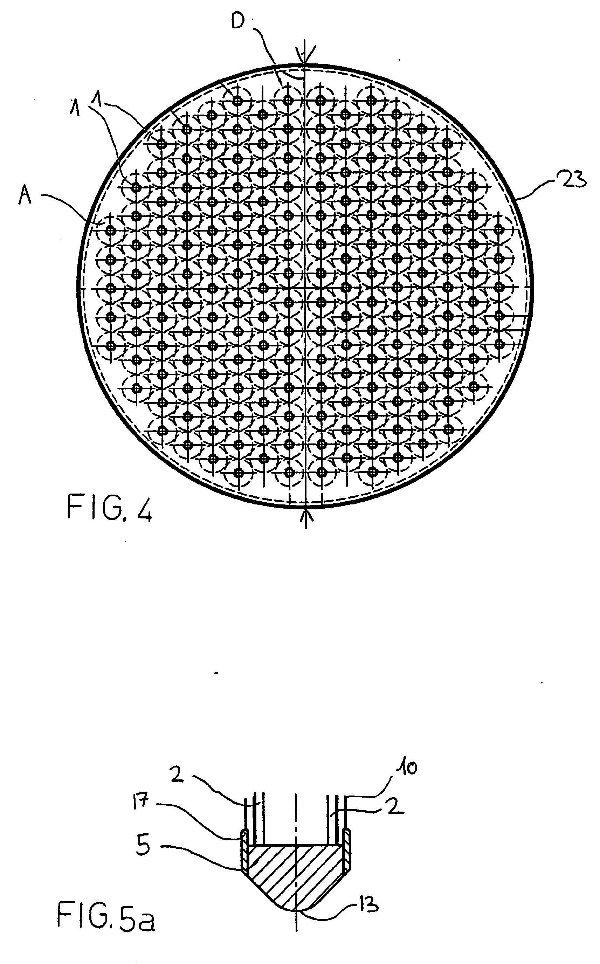

Figur 4 zeigt einen Querschnitt durch den Kessel 23 eines Anschwemmkerzenfilters gemäss der Erfindung. Der Kessel 23 ist in an sich bekannter Weise aufgebaut und weist einen freien Innendurchmesser D auf. Eine Vielzahl von Filterkerzen 1 ist im Kessel 23 angeordnet. Im spezifischen Ausführungsbeispiel sind beispielsweise 178 Kerzen bienenwabenartig angeordnet. Dadurch lässt sich eine optimale Bepackung des Innenraums des Kessels 23 erzielen. Erfindungsgemäss ist die Anzahl der Filterkerzen und der Aussendurchmesser d der Filterkerzen bzw. der Innendurchmesser d' der Filterkerze 1 (siehe Figur 3) so gewählt, dass das Produkt aus Kerzenaussendurchmesser d in mm und Kerzenabstand m in mm kleiner oder gleich 2300mm2 ist. Das Produkt bildet das Optimum aus Filterfläche und Trubvolumen, wobei der Kerzendurchmesser die Filterfläche und der Kerzenabstand das Trubvolumen bestimmen. Das Produkt aus Kerzendurchmesser und Kerzenabstand beträgt im spezifischen Ausführungsbeispiel 1800mm2 (d=25mm x m=72mm).

Ein Vergleich der erfindungsgemässen Filterkerzen mit reduziertem Aussendurchmesser d mit herkömmlichen Filterkerzen zeigt die Vorteile, welche mit der vorliegenden Erfindung erzielt werden können.

Typischerweise wurden bisher Filterkerzen mit einem Aussendurchmesser von 32,5 mm eingesetzt. In dem bereits erwähnten Filterkessel mit einem Innendurchmesser von 1088 mm liessen sich 114 solche herkömmliche Kerzen einsetzen. Bei gleicher Kerzenlänge wird die Kerzenoberfläche mit erfindungsgemässen Filterkerzen mit reduziertem Aussendurchmesser um ca. 20 % erhöht. Dies beruht darauf, dass auf Grund der geringeren Dimensionen mehr Kerzen angeordnet werden können. Dadurch lässt sich auch die Filterleistung um mehr ca. 20 % erhöhen, ohne dass die Dimension der Filteranlage vergrössert werden muss. Typischerweise lässt sich mit der beschriebenen erfindungsgemässen Anordnung fast 95 hl Bier pro Stunde filtrieren. Mit herkömmlichen Filterkerzen liess sich aber nur 77 hl Bier pro Stunde filtrieren.

Mit der erfindungsgemässen Kerze wird die Dicke der Anschwemmschicht A bzw. des sich bildenden Filterkuchens ebenfalls reduziert. Der maximale Durchmesser des Filterkuchens bei Kerzen gemäss der Erfindung in der vorstehend beschriebenen Anordnung beträgt 70mm. Die maximale Kuchendicke beträgt daher 22,5 mm. Bei herkömmlichen wie vorstehend beschriebenen Kerzen beträgt der maximale Kuchendurchmesser 87 mm und die Kuchendicke 27,25 mm. Dadurch lässt sich auch der Abstand zwischen Kerzen von 89 mm bei herkömmlichen Kerzen auf 72 mm im spezifischen Ausführungsbeispiel gemäss der Erfindung reduzieren. Zwischen benachbarten Kerzen bzw. den Anschwemmschichten wird jeweils ein Sicherheitsabstand von 2 mm belassen. Weil der Kerzenabstand zwischen einzelnen Anschwemmfilterkerzen 1 gemäss der Erfindung reduziert werden kann, können mehr Kerzen pro Quadratmeter Querschnittsfläche des Unfiltratraums vorgesehen werden. Dadurch lässt sich die Filterfläche insgesamt erhöhen.

Ausserdem lässt sich das Filtratvolumen des Kerzenpakets mit der erfindungsgemässen Anschwemmfilterkerze reduzieren. Das Gesamtvolumen aller Kerzen gemäss dem beschriebenen erfindungsgemässen Ausführungsbeispiel beträgt 52 Liter im Vergleich zu 62 Liter beim vorstehend beschriebenen Ausführungsbeispiel mit herkömmlichen Filterkerzen. Das Filtratvolumen wird dadurch um 16 % reduziert. Selbst wenn das Volumen im Filtratraum 24 von 178 Litern gemäss einem Ausführungsbeispiel berücksichtigt wird, ergibt sich immer noch eine Reduktion des totalen Filtratvolumens von 4 %.

In Figur 5a ist ein erstes Ausführungsbeispiel eines Abschlussstücks 5 gezeigt. Das Abschlussstück 5 weist an seinem unteren Ende 13 eine Verjüngung auf. Die Verjüngung ist typischerweise konisch ausgeführt. Das untere Ende ist leicht abgerundet. Dadurch wird erreicht, dass Rückspülflüssigkeit beim Rückspülvorgang entlang der verjüngenden Fläche gegen die Spitze am Ende 13 des Abschlussstückes 5 fliesst und von da abtropft. Das Abschlussstück 5 ist mit einer Hülse 17 versehen, welche das unterste Ende der Kerzenwand 10 abdeckt. In Figur 5b ist ein alternatives Ausführungsbeispiel gezeigt. Im Beispiel gemäss Figur 5b ist das untere Ende 13 des Abschlussstückes 15 halbkugelförmig ausgebildet. Im übrigen ist das Ausführungsbeispiel gemäss Figur 5b identisch wie das Beispiel gemäss Figur 5a.

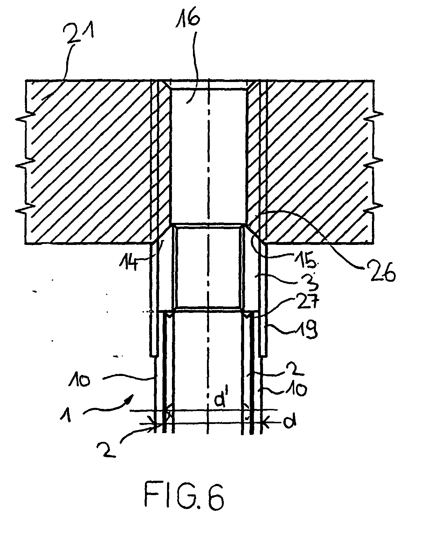

Figur 6 zeigt eine vergrösserte Darstellung des Kopfstücks 3, mit welcher die Filterkerze 1 in einer Öffnung 16 der Trennplatte 21 befestigt wird. Das Kopfstück 3 weist einen Ringbuckel 27 auf, auf dem die Tragstäbe 2 in an sich bekannter Weise (siehe z.B. EP 203 206) angeschweisst sind. Eine Hülse 19 ist um das Kopfstück 3 angeordnet und deckt den obersten Teil der Kerzenwand 10 ab. An einem oberen Ende 14 weist das Kopfstück 3 eine konische Dichtfläche 15 auf. Die konische Dichtfläche 15 wird gegen eine entsprechende Dichtfläche 26, welche die Öffnung 16 in der Lochplatte 21 umrundet, gepresst. Die Filterkerze 1 wird an der Trennplatte 21 in an sich bekannter Weise festgeschraubt.

Die Konstruktion der Filterkerze 1 und deren Befestigung an der Trennplatte erfolgt im übrigen in an sich bekannter Art und Weise, insbesondere beispielsweise gemäss der Ausführung in EP 203 206. Der Draht 7 weist in an sich bekannter Weise einen dreieckförmigen Querschnitt auf. Die Spitze des Dreiecks ist nach innen gerichtet und wird mit den Tragstäben 2 verbunden. Die glatte Aussenfläche des Wickeldrahtes 7 bildet die Aussenseite der Kerzenwand 10.

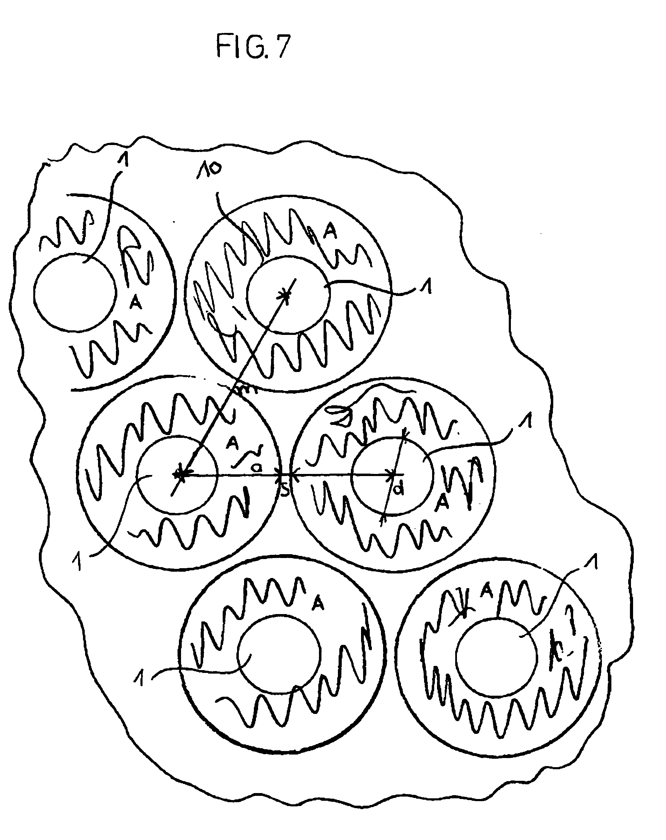

In Figur 7 ist eine vergrösserte Darstellung eines Ausschnitts des Querschnitts durch einen Filterkessel (siehe Figur 4) gezeigt. Filterkerzen 1 sind bienenwabenartig angeordnet. Im Verlauf der Anschwemmung mit Filterhilfsmittel und der Filtration bildet sich auf der Kerzenwand 10 eine Anschwemmschicht A aus Filterhilfsmittel. Trubstoffe lagern sich im Verlauf der Filtration an der Anschwemmschicht an, so dass die Anschwemmschicht A im Laufe der Zeit auf Grund der Trubstoffe und auf Grund von in das Unfiltrat zudosiertem Filterhilfsmittel anwächst. Die Filtration wird solange fortgeführt, bis die Filterschicht einen maximalen Durchmesser 2a aufweist. Der maximale Durchmesser 2a beträgt im erfindungsgemässen Ausführungsbeispiel 70 mm. Dadurch ergibt sich zwischen den Anschwemmschichten A zweier benachbarten Filterkerzen bei einem Abstand m von 72 mm ein Spalt s von 2 mm. Dieser Spalt wird als Sicherheitsabstand vorgesehen, damit die Anschwemmschichten A benachbarter Filterkerzen sich nicht berühren, was zu ungleichmässigen Druckverhältnissen und somit Verbiegungen der Kerze führen könnte.

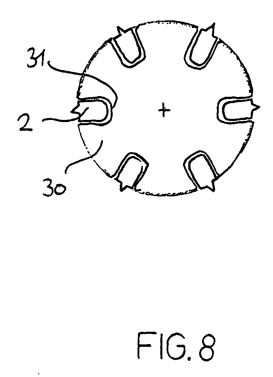

Figur 8 zeigt schematisch einen Dorn 30, auf welchem Tragstäbe 2 befestigt werden. Zur Herstellung einer Kerzenwand 10 einer erfindungsgemässen Filterkerze werden Tragstäbe 2 auf diesem Dorn 30 in Vertiefungen 31 befestigt. Unter Drehung des Dorns wird in an sich bekannter Weise der Draht (in Figur 8 nicht gezeigt) schraubenlinienförmig auf die Tragstäbe 2 aufgewickelt und mit diesen verschweisst. Damit der Durchmesser der Filterkerze erfindungsgemäss reduziert werden kann, weisen die Tragstäbe 22 (siehe auch Figur 3) eine Abrundung an ihrem radialen inneren Ende 12 auf. Dank der Abrundung wird vermieden, dass die inneren Enden der Tragstäbe 2 bei kleinen Kerzendurchmessern zu nahe beieinander liegen.

## Patentansprüche

1. Anschwemmfilterkerze (1) mit einer Mehrzahl von Tragstäben (2), einem Kopfstück (3) zur Befestigung der Kerze (1) an einer Trennwand (21) eines Kerzenfilters (20), welches mit einem Ende (4a) der Tragstäbe verbunden ist,
und mit einem Abschlussstück (5) zur Abtrennung eines Kerzeninnenraums (6) gegen einen Unfiltratraum (22),
wobei ein Draht (7) schraubenlinienförmig auf die Tragstäbe (2) aufgewickelt ist, so dass zwischen benachbarten Drahtwindungen (8a, 8b) ein Spalt (9) für den Durchtritt von Flüssigkeit gebildet wird und der Draht (7) eine Kerzenwand (10) als Unterlage für eine Anschwemmfilterschicht (A) bildet,
**dadurch gekennzeichnet, dass** der Aussendurchmesser (d) der Kerze kleiner als 30 mm ist und dass die Tragstäbe (2) auf ihrer radial nach Innen gerichteten Seite (12) eine Querschnittsverjüngung, insbesondere eine Abrundung aufweisen

2. Anschwemmfilterkerze nach Anspruch 1, **dadurch gekennzeichnet, dass** der Aussendurchmesser (d) der Kerze zwischen 20 mm und 28 mm beträgt.

3. Anschwemmfilterkerze nach Anspruch 1 oder 2, **dadurch gekennzeichnet, dass** der Aussendurchmesser der Kerze 25 mm beträgt.

4. Anschwemmfilterkerze nach einem der Ansprüche 1 bis 3, **dadurch gekennzeichnet, dass** die Anschwemmfilterkerze (1) weniger als 8 Tragstäbe (2) aufweist.

5. Anschwemmfilterkerze nach einem der Ansprüche 1 bis 4, **dadurch gekennzeichnet, dass** die Anschwemmfilterkerze 4 bis 7 Tragstäbe (2) aufweist.

6. Anschwemmfilterkerze nach einem der Ansprüche 1 bis 5, **dadurch gekennzeichnet, dass** die Anschwemmfilterkerze 6 Tragstäbe (2) aufweist.

7. Anschwemmfilterkerze nach einem der Ansprüche 1 bis 6, **dadurch gekennzeichnet, dass** sich das Abschlussstück (5) gegen ein Ende (13) hin verjüngt.

8. Anschwemmfilterkerze nach einem der Ansprüche 1 bis 7, **dadurch gekennzeichnet, dass** das Kopfstück (3) an seinem mit der Trennwand (21) in Kontakt bringbaren Ende (14) eine konische Dichtfläche 15 aufweist.

9. Anschwemmkerzenfilter (20) mit einem Filterkessel (23) mit einer Trennwand (21), welche den Filterkessel (23) in einen Unfiltratraum (22) und in einem Filtratraum (24) trennt und mit einer Vielzahl von an der Trennwand (21) befestigten Anschwemmfilterkerzen (1) gemäss einem der Ansprüche 1 bis 8, welche sich von der Trennwand (21) in den Unfiltratraum (22) erstrecken,
**dadurch gekennzeichnet, dass** das Produkt aus Kerzenaussendurchmesser (d) in mm und Abstand der Kerzenachsen (m) in mm zwischen 1000mm² und 2300mm² beträgt.

10. Anschwemmkerzenfilter (20) nach Anspruch 9, **dadurch gekennzeichnet, dass** das Produkt aus Kerzenaussendurchmesser (d) in mm und Abstand der Kerzenachsen (m) in mm zwischen 1500mm² bis 2000 mm² beträgt.

11. Anschwemmkerzenfilter (20) nach Anspruch 9 oder 10, **dadurch gekennzeichnet, dass** die Gesamtoberfläche der Kerzenwand (10) aller Anschwemmfilterkerzen (1) mehr als 10 m2, pro Meter Filterkerzenlänge (L) und pro m2 Querschnittfläche des Unfiltratraums (22) beträgt.

12. Anschwemmkerzenfilter (20) nach einem der Ansprüche 9 bis 11, **dadurch gekennzeichnet, dass** die Gesamtoberfläche der Kerzenwand (10) aller Anschwemmfilterkerzen (1) mehr als 12 m² pro Meter Filterkerzenlänge (L) und pro m² Querschnittsfläche des Unfiltratraums (22) beträgt.

13. Verwendung einer Filterkerze nach einem der Ansprüche 1 bis 8 in einem Anschwemmfilter nach einem der Ansprüche 9 bis 12.

14. Verwendung einer Filterkerze nach einem der Ansprüche 1 bis 8 zum Ersetzen von Filterschichten einer Horizontalfilteranlage.

## Claims

1. Precoat filter cartridge (1) having a plurality of supporting rods (2), a top piece (3) for fixing the cartridge (1) to a dividing wall (21) of a cartridge filter (20), which top piece is connected to one end (4a) of the supporting rods,
and having a terminating piece (5) for dividing off a cartridge internal space (6) with respect to an unfiltrate space (22),
a wire (7) being wound helically onto the supporting rods (2), so that a gap (9) for the passage of liquid is formed between adjacent turns (8a, 8b) of the wire, and the wire (7) forms a cartridge wall (10) as a substrate for a precoat filter layer (A),
**characterized in that** the outer diameter (d) of the cartridge is less than 30 mm and **in that**, on their side (12) oriented radially inwards, the supporting rods (2) have a cross-sectional taper, in particular a rounded portion.

2. Precoat filter cartridge according to Claim 1, **characterized in that** the outer diameter (d) of the cartridge is between 20 mm and 28 mm.

3. Precoat filter cartridge according to Claim 1 or 2, **characterized in that** the outer diameter of the cartridge is 25 mm.

4. Precoat filter cartridge according to one of Claims 1 to 3, **characterized in that** the precoat filter cartridge (1) has less than 8 supporting rods.

5. Precoat filter cartridge according to one of Claims 1 to 4, **characterized in that** the precoat filter cartridge has 4 to 7 supporting rods (2).

6. Precoat filter cartridge according to one of Claims 1 to 5, **characterized in that** the precoat filter cartridge has 6 supporting rods (2).

7. Precoat filter cartridge according to one of Claims 1 to 6, **characterized in that** the terminating piece (5) tapers towards one end (13).

8. Precoat filter cartridge according to one of Claims 1 to 7, **characterized in that** the top piece (3) has a conical sealing surface (15) at its end (14) that can be brought into contact with the dividing wall (21).

9. Precoat cartridge filter (20) having a filter vessel (23) with a dividing wall (21), which divides the filter vessel (23) into an unfiltrate space (22) and into a filtrate space (24), and having a large number of precoat filter cartridges (1), according to one of Claims 1 to 8, which are fixed to the dividing wall (21) and extend from the dividing wall (21) into the unfiltrate space (22),
**characterized in that** the product of cartridge outer diameter (d) in mm and spacing of the cartridge axes (m) in mm is between 1000 mm² and 2300 mm².

10. Precoat cartridge filter (20) according to Claim 9, **characterized in that** the product of cartridge outer diameter (d) in mm and spacing of the cartridge axes (m) in mm is between 1500 mm² and 2000 mm².

11. Precoat cartridge filter (20) according to Claim 9 or 10, **characterized in that** the total surface of the cartridge wall (10) of all precoat filter cartridges (1) is more than 10 m² per m of filter cartridge length (L) and per m² of cross-sectional area of the unfiltrate space (22).

12. Precoat cartridge filter (20) according to one of Claims 9 to 11, **characterized in that** the total surface of the cartridge wall (10) of all precoat filter cartridges (1) is more than 12 m² per m of filter cartridge length (L) and per m² of cross-sectional area of the unifiltrate space (22).

13. Use of a filter cartridge according to one of Claims 1 to 8 in a precoat filter according to one of Claims 9 to 12.

14. Use of a filter cartridge according to one of Claims 1 to 8 to replace filter layers of a horizontal filter system.

## Revendications

1. Bougie de filtration pour filtre à précouche (1) comprenant une pluralité de barres de support (2), une partie de tête (3) pour la fixation de la bougie (1) sur une paroi de séparation (21) d'un filtre à bougie (20) qui est connecté à une extrémité (4a) des barres de support,
et comprenant une partie de terminaison (5) pour séparer un espace intérieur de la bougie (6) d'un espace de produit non filtré (22),
un fil métallique (7) étant enroulé en hélice sur les barres de support (2) de sorte qu'entre les enroulements adjacents de fil métallique (8a, 8b) soit formé un interstice (9) pour le passage de liquide et le fil métallique (7) formant une paroi de bougie (10) servant de subjectile pour une couche de filtre à précouche (A),
**caractérisée en ce que**
le diamètre extérieur (d) de la bougie est inférieur à 30 mm et **en ce que** les barres de support (2) présentent sur leur côté orienté radialement vers l'intérieur (12) un rétrécissement de section transversale, notamment un arrondissement.

2. Bougie de filtration pour filtre à précouche selon la revendication 1, **caractérisée en ce que** le diamètre extérieur (d) de la bougie est compris entre 20 mm et 28 mm.

3. Bougie de filtration pour filtre à précouche selon la revendication 1 ou 2, **caractérisé en ce que** le diamètre extérieur de la bougie vaut 25 mm.

4. Bougie de filtration pour filtre à précouche selon l'une quelconque des revendications 1 à 3, **caractérisé en ce que** la bougie de filtration pour filtre à précouche (1) présente moins de 8 barres de support (2).

5. Bougie de filtration pour filtre à précouche selon l'une quelconque des revendications 1 à 4, **caractérisée en ce que** la bougie de filtration pour filtre à précouche présente 4 à 7 barres de support (2).

6. Bougie de filtration pour filtre à précouche selon l'une quelconque des revendications 1 à 5, **caractérisée en ce que** la bougie de filtration pour filtre à précouche présente 6 barres de support (2).

7. Bougie de filtration pour filtre à précouche selon l'une quelconque des revendications 1 à 6, **caractérisée en ce que** la partie de terminaison (5) se rétrécit vers une extrémité (13).

8. Bougie de filtration pour filtre à précouche selon l'une quelconque des revendications 1 à 7, **caractérisée en ce que** la partie de tête (3) présente à son extrémité (14) pouvant être amenée en contact avec la paroi de séparation (21) une surface d'étanchéité conique (15).

9. Filtre à précouche à bougie de filtration (20) comprenant un récipient filtrant (23) avec une paroi de séparation (21) qui sépare le récipient filtrant (23) en un espace de produit non filtré (22) et un espace de produit filtré (24) et comprenant une pluralité de bougies de filtration pour filtre à précouche (1) selon l'une quelconque des revendications 1 à 8, fixées sur la paroi de séparation (21) qui s'étendent depuis la paroi de séparation (21) dans l'espace de produit non filtré (22),
**caractérisé en ce que**
le produit du diamètre extérieur des bougies (d) en mm et de la distance de l'axe des bougies (m) en mm est compris entre 1000 mm² et 2300 mm².

10. Filtre à précouche à bougie de filtration (20) selon la revendication 9, **caractérisé en ce que** le produit du diamètre extérieur des bougies (d) en mm et de la distance de l'axe des bougies (m) en mm est compris entre 1500 mm² et 2000 mm².

11. Filtre à précouche à bougie de filtration (20) selon la revendication 9 ou 10, **caractérisé en ce que** la surface totale de la paroi de bougie (10) de toutes les bougies de filtration pour filtre à précouche (1) vaut plus de 10 m², par mètre de longueur de bougie de filtration (L) et par m² de surface en section transversale de l'espace de produit non filtré (22).

12. Filtre à précouche à bougie de filtration (20) selon l'une quelconque des revendications 9 à 11, **caractérisé en ce que** la surface totale de la paroi de bougie (10) de toutes les bougies de filtration pour filtre à précouche (1) vaut plus de 12 m², par mètre de longueur de bougie de filtration (L) et par m² de surface en section transversale de l'espace de produit non filtré (22).

13. Utilisation d'une bougie de filtration selon l'une quelconque des revendications 1 à 8 dans un filtre à précouche selon l'une quelconque des revendications 9 à 12.

14. Utilisation d'une bougie de filtration selon l'une quelconque des revendications 1 à 8 pour remplacer des couches de filtration d'une installation de filtration horizontale.
